# EUROPÄISCHE PATENTSCHRIFT

(11) **EP 2 037 054 B1**
(45) Veröffentlichungstag und Bekanntmachung des Hinweises auf die Patenterteilung: **08.03.2017**
(21) Anmeldenummer: 08162415.7
(22) Anmeldetag: 14.08.2008
(51) Int. Cl.: E04B 1/80

(54) **Vakuum-Isolierelement**
Vacuum insulating element
Elément d'isolation sous vide

(30) Priorität: 14.08.2007 DE 102007038459
(43) Veröffentlichungstag der Anmeldung: 18.03.2009
(73) Patentinhaber: KAEFER Isoliertechnik GmbH & Co. KG, 28195 Bremen (DE)
(72) Erfinder: Niemann, Peter, 28755 Bremen (DE); Busch, Thomas, 27367 Reeßum (DE); Singer-Jürgensen, Volker, 21031 Hamburg (DE); Schäfer, Torsten, 24147 Klausdorf (DE); Friese, Karl-Rudolf, 28759 Bremen (DE)
(74) Vertreter: Tappe, Udo

(56) Entgegenhaltungen:
- WO-A-97/11842
- WO-A-03/023157
- DE-U1-202004 004 187

## Beschreibung

Die Erfindung betrifft ein plattenförmiges Vakuum-Isolierelement mit einem Kern aus porösem Material, zum Beispiel einem Kunststoffschaum, der von einer Umhüllung aus einer Kunststoff-Folie vakuumdicht umgeben ist, wobei die Umhüllung auf beiden Seiten mit einer mechanisch stabilen Abdeckung versehen ist und die Abdeckungen Kanten des Isolierelementes umgreifen.
Solche Vakuum-Isolierelemente ist aus WO 03/023157 bekannt.
Aufgrund der hohen Isolationswirkung von Vakuum-Isolierelementen, also ihrer geringen Wärmeleitfähigkeit, werden sie sehr gerne zum Erstellen dünnwandiger Isolierschichten, beispielsweise für Kühlzellen an Bord von Schiffen, eingesetzt. Der Kern aus dem porösen Material dient dazu, beim Ziehen des Vakuums die Folienumhüllung zu tragen. Der Kern selbst ist meist auch aus einem isolierenden Material, beispielsweise einem Polyurethanschaum oder auch aus mikroporöser Kieselsäure, hergestellt. Die Folienumhüllung sorgt nicht nur für das Halten des Vakuums sondern sie bildet gleichzeitig auch eine Dampfsperre gegen Eindringen von Feuchtigkeit. Solche Vakuum-Isolierelemente, auch als Folienelemente bezeichnet, zeichnen sich dadurch aus, dass das Vakuum, und damit die Isolationswirkung, über einen sehr langen Zeitraum gehalten wird. Nachteilig bei diesen Folienelementen ist jedoch, dass sie sehr instabil sind und deshalb raumhohe Isolierelemente nicht möglich sind. Es müssen mehrere Isolierelemente übereinander angeordnet werden. Darüber hinaus sind die Elemente empfindlich gegen mechanische Beschädigung der Folienumhüllung, so dass dann das Vakuum verloren geht.
Daneben sind auch Vakuum-Isolierelemente bekannt, welche mit einer Blechumhüllung versehen sind. Die Blechumhüllung sorgt nicht nur für das Halten des Vakuums sondern sie dient auch als Schutz gegen mechanische Beschädigung und stabilisiert das Dämmelement. Darüber hinaus können an die Blechabdeckung Stehbolzen angeschweißt werden, welche zum Anbringen von Einbauelementen in die beispielsweise Kühlzelle (zum Beispiel Lagerregale) dienen. Diese Stehbolzen werden vor dem Ziehen des Vakuums auf die Blechumhüllung aufgeschweißt. Danach wird das Vakuum gezogen und die Blechumhüllung abgedichtet. Nachteilig ist dabei das aufwendige Schweißverfahren im Randbereich und die Wärmebrücke durch die metallische Abdeckung der Ränder.

Bei dem aus der eingangs genannten WO 03/023157 bekannten Isolierelement ist randseitig ein Abstandhalter vorgesehen, der die den Vakuumkern abdeckende Abdeckungen auf Abstand hält. Dieser ist aus einem harten Material gefertigt und kann daher Wärmebrücken zwischen benachbarten Elementen nicht verhindern.

Ferner ist aus DE 20 2004 004 187 U1 ein Vakuumisolierelement bekannt, bei dem der Vakuumkern von einem Rahmen umgeben ist, der die Kanten des Kern U-förmig umschließt. Auch dieser Rahmen kann Wärmebrücken zwischen benachbarten Isolierelementen nicht verhindern.

Hiervon ausgehend liegt der Erfindung das Problem zugrunde, ein Vakuum-Isolierelement der eingangs genannten Art derart weiterzubilden, dass zwischen benachbarten Vakuum-Isolierelement Wärmebrücken vermieden sind.
Zur Lösung dieses Problems ist das erfindungsgemäße Vakuum-Isolierelement dadurch gekennzeichnet, dass ein Spalt zwischen freien Kanten der Abdeckungen verbleibt und eine umlaufende, kälteelastische Umrandung, beispielsweise aus einem Kunststoffschaum, zwischen den freien Kanten der Abdeckung vorquillt, sodass ein elastisches Anschmiegen der Umrandung gegen beispielsweise benachbarte Elemente sichergestellt ist.

Aufgrund der mechanisch stabilen Abdeckung lassen sich auf einfache Weise auch unregelmäßig berandete Formen z.B. mit Ausschnitten für Kabeldurchführungen erzeugen, indem man die folienumhüllten Isolierelemente in geeigneter Weise anordnet. Die mechanisch stabile Abdeckung bildet gleichsam ein Rückrad für die Folienelemente, so dass diese in sich stabil werden und raumhohe Elemente erstellt werden können. Gleichzeitig bietet die mechanisch stabile Abdeckung einen Schutz gegen mechanische Beschädigung bei Transport, Montage und Betrieb. Zu diesem Zweck sollte sie wenigstens auf der dem Raum zugewandten Seite angeordnet sein. Vorzugsweise ist sie aber zu beiden Seiten des flächigen Isolierelementes angeordnet. Um auch die Kanten des Isolierelementes zu schützen, umgreift die Abdeckung die Kanten. Dabei verbleibt zwischen den Abdeckungen ein Spalt, so dass die Umrandung aus diesem Spalt vorquillt. Die kälteelastische Umrandung schmiegt sich elastisch an benachbarte Isolierelemente oder dergleichen und sorgt so für einen konvektionsfreien Übergang zwischen benachbarten Isolierelementen. Wärmebrücken werden dadurch vermieden. Bei bekannten Folien- oder auch Blechelementen bestand nämlich das Problem, dass oft ein Luftspalt zwischen benachbarten Elementen auftrat, welcher zu Wärmeverlusten durch Konvektion führte.

Die Abdeckung selbst kann aus einem Metallblech oder Kunststoff hergestellt sein. Auf diese Weise ergibt sich auch die Möglichkeit, Stehbolzen an der Abdeckung, beispielsweise durch Schweißen, anzubringen. Auf diese Weise lassen sich Möbel oder dergleichen, wie beispielsweise Lagerregale, an der so erstellten Wand befestigen.

Trotz gegenteiliger Annahmen wegen der fehlenden metallischen Randabdeckung der erfindungsgemäßen Isolierelemente hat sich bei Brandtests überraschenderweise ergeben, dass mit den erfindungsgemäßen Isolierelementen, deren Folienelemente mit mikroporöser Kieselsäure gefüllt sind, eine Brandklassifizierung A60 ohne weitere Maßnahmen erreicht werden kann. Dadurch können die anderenfalls notwendigen schiffbaulichen Stahlwände als Umhüllung für konventionelle Kühlzellen entfallen.

Die Erfindung wird nachfolgend anhand eines in der Zeichnung dargestellten Ausführungsbeispiels näher erläutert. In der Zeichnung zeigen:
- Fig. 1: ein nicht zur Erfindung gehörendes Beispiel für ein Vakuum-Isolierelement im Längsschnitt,
- Fig. 2: einen Bereich des Isolierelementes gemäß Fig. 1 in perspektivischer Darstellung,
- Fig. 3: ein Ausführungsbeispiel für ein Vakuum-Isolierelement mit den Erfindungsmerkmalen im Vertikalschnitt,
- Fig. 4: das Isolierelement gemäß Fig. 3 in perspektivischer Darstellung.

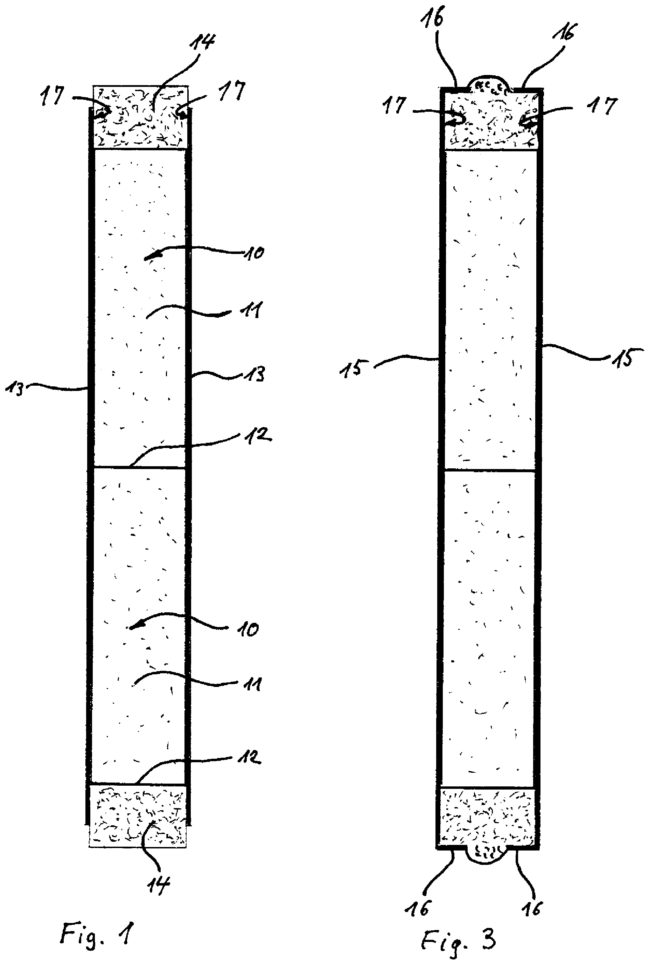

Das in Fig. 1 dargestellte, nicht zur Erfindung gehörende Vakuum-Isolierelement weist zwei übereinander angeordnete Isolierelemente 10 mit jeweils einem Kern 11 aus einem Kunststoffschaum auf. Dieser Kern 11 ist mit einer vakuumdichten Umhüllung 12 aus einer Kunststoff-Folie versehen. Das Innere der Umhüllung 12 wird zur Erlangung der Isolationswirkung evakuiert und sodann die Umhüllung 12 vakuumdicht verschlossen.

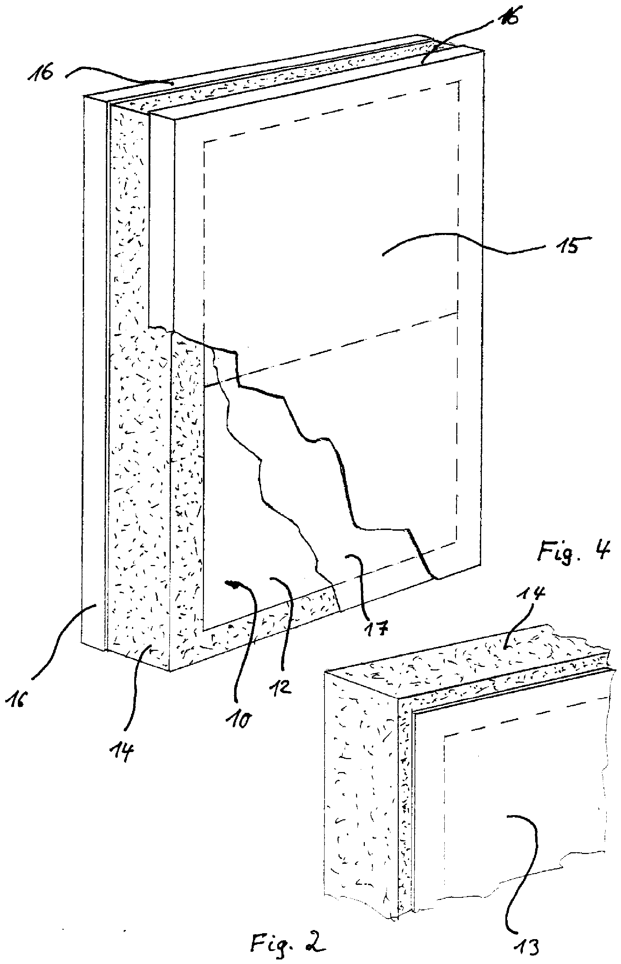

Zu beiden Seiten der Isolierelemente 10 ist jeweils eine Abdeckung 13 aus einem mechanisch stabilen Material, konkret aus Metallblech, angeordnet und fest mit den Isolierelementen 10 verbunden, beispielsweise mittels Kleber 17 verklebt. Ferner weist das insoweit beschriebene Vakuum-Isolierelement eine umlaufende Umrandung 14 aus einem kälteelastischen Kunststoffschaum auf. Diese Umrandung 14 steht bei dem Ausführungsbeispiel gemäß Fig. 1 und 2 über die Abdeckungen 13 vor. Diese Umrandung 14 schmiegt sich elastisch an beispielsweise benachbarte Isolierelemente und sorgt so für eine Abdichtung gegenüber denselben.

Das Ausführungsbeispiel gemäß Fig. 3 und 4 unterscheidet sich von dem vorstehend beschriebenen Ausführungsbeispiel durch eine abweichend ausgebildete Abdeckung 15. Konkret ist jede Abdeckung 15 über die Kanten der Isolierelemente 10, konkret über die Kanten der Umrandung 14, nach innen umgebördelt (Umbördelung 16), so daß die Kanten gegen mechanische Beschädigungen geschützt sind. Die Umbördelungen 16 sind dabei so ausgebildet, daß sie nicht die gesamte Dicke des Vakuum-Isolierelementes überdecken, sondern ein Spalt zwischen den freien Kanten der Umbördelungen 16 verbleibt, zwischen denen die Umrandung 14, wie in Fig. 3 dargestellt, vorquillt. Auch hierdurch ist ein elastisches Anschmiegen der Umrandung 14 gegen beispielsweise benachbarte Elemente sichergestellt.

### Bezugszeichenliste:

- 10: Isolierelement
- 11: Kern
- 12: Umhüllung
- 13: Abdeckung
- 14: Umrandung
- 15: Abdeckung
- 16: Umbördelung
- 17: Kleber

## Patentansprüche

1. Plattenförmiges Vakuum-Isolierelement mit einem Kern (11) aus porösem Material, zum Beispiel einem Kunststoffschaum, der von einer Umhüllung (12) aus einer Kunststoffolie vakuumdicht umgeben ist, wobei die Umhüllung (12) auf beiden Seiten mit einer mechanisch stabilen Abdeckung (13, 15) versehen ist und die Abdeckungen (13, 15) Kanten des Isolierelementes umgreifen, dadurch h **gekennzeichnet,** dass ein Spalt zwischen freien Kanten der Abdeckungen (13, 15) verbleibt und eine umlaufende, kälteelastische Umrandung (14), beispielsweise aus einem Kunststoffschaum, zwischen den freien Kanten der Abdeckungen vorquillt, sodass ein elastisches Anschmiegen der Umrandung (14) gegen beispielsweise benachbarte Elemente sichergestellt ist.

2. Vakuum-Isolierelement nach Anspruch 1, **dadurch gekennzeichnet, dass** die Abdeckung (13, 15) aus Metallblech oder Kunststoff gebildet ist.

## Claims

1. Panel-shaped vacuum insulation element with a core (11), made of porous material such as a plastic foam, surrounded in a vacuum-tight manner by a cladding (12) made of a plastic film, wherein both sides of the cladding (12) are provided with a mechanically stable cover (13, 15), and the covers (13, 15) engage around the edges of the insulation element, **characterised in that** a gap remains between the free edges of the covers (13, 15) and a peripheral, low-temperature flexible border (14), made for example of a plastic foam, emerges between the free edges of the covers, such that a resilient tight fit of the border (14) against for example neighbouring elements is ensured.

2. Vacuum insulation element according to claim 1, **characterised in that** the cover (13, 15) is made of sheet metal or plastic.

## Revendications

1. Élément d'isolation à vide avec un noyau (11) constitué d'un matériau poreux, par exemple une mousse de matière plastique, qui est entouré de manière étanche au vide par une enveloppe (12) constituée d'un film de matière plastique, l'enveloppe (12) étant munie, des deux côtés, d'un couvercle (13, 15) mécaniquement stable et les couvercles (13, 15) entourant les arêtes de l'élément d'isolation, **caractérisé en ce qu'**un interstice subsiste entre des arêtes libres des couvercles (13, 15) et une bordure (14) circulaire, élastique à froid, constituée par exemple d'une mousse en matière plastique, dépassant entre les arêtes libres des couvercles, de façon à ce que la bordure (14) épouse par exemple la forme d'éléments adjacents.

2. Élément d'isolation à vide selon la revendication 1, **caractérisé en ce que** le couvercle (13, 15) est constitué d'une tôle métallique ou de matière plastique.
